Europäisches Patentamt

European Patent Office

Office européen des brevets

(19)

(11) Publication number: **0 194 855**
A2

(12)

# EUROPEAN PATENT APPLICATION

(21) Application number: 86301736.4

(22) Date of filing: 11.03.86

(51) Int. Cl.⁴: **B 29 C 43/12**
B 29 C 33/20, B 29 C 43/50
B 30 B 15/00

(30) Priority: 02.05.85 JP 95121/85
26.03.85 JP 44192/85 U
11.03.85 JP 34991/85 U
05.04.85 JP 51512/85 U
27.01.86 JP 10487/86 U

(43) Date of publication of application:
17.09.86 Bulletin 86/38

(84) Designated Contracting States:
DE FR IT

(71) Applicant: KABUSHIKI KAISHA KOBE SEIKO SHO also
known as Kobe Steel Ltd.
3-18 1-chome, Wakinohama-cho Chuo-ku
Kobe 651(JP)

(72) Inventor: Amano, Itaru
201-18 Tomogaoka 8-chome
Suma-ku Kobe(JP)

(72) Inventor: Fujieda, Yashuhiko
1629-172 Aza Higashiyama Nishiyama Ohkuradani
Akashi Hyogo-ken(JP)

(72) Inventor: Ichikawa, Katsumi
3781-26 Aza Higashiyama Nishiyama Ohkuradani
Akashi Hyogo-ken(JP)

(72) Inventor: Kanzawa, Masahide
1 Mufunedori 2-chome
Nagata-ku Kobe(JP)

(72) Inventor: Yanagihara, Toshio
8-12 Kumochi-cho 1-chome
Chuo-ku Kobe(JP)

(72) Inventor: Misumi, Shikao
10-1 Arinodai 1-chome
Kita-ku Kobe(JP)

(74) Representative: Wright, Hugh Ronald et al,
Brookes & Martin 52/54 High Holborn
London WC1V 6SE(GB)

(54) Tyre vulcanizer.

(57) A tyre vulcanizer comprising a lower mould assembly
secured to a press base, an uper mould assembly held
movably up and down on a press side frame and provided to
be opened and closed with respect to the lower mould
assembly, a moulding bladder expansible with respect to a
centre mechanism of the lower mould assembly and pressurized heating medium supplying means, characterized in that
for maintaining a parallelism of the upper and lower mould
assemblies, a torsion shaft for maintaining the parallelism
which is movable up and down and rotatable about an axis in
synchronism with the upper mould assembly is mounted at a
position parallel to the press base, at a right angle to the side
frame and not interfering with the uper and lower mould
assemblies.

EP 0 194 855 A2

86301736.4

0194855

# TYRE VULCANIZER

The present invention primarily relates to a tyre vulcanizer in which green tyres are sealed into upper and lower moulds, respectively, in upper and lower mould assemblies, and vulcanization and moulding of the tyres are effected through insertion of a moulding bladder in to the inside of the tyre, supply a pressurized heating medium into the bladder and heating of the upper and lower moulds. It is particularly important to maintain the upper and lower mould assemblies accurately parallel.

The present invention further relates to an improvement in the device by which adjustment of an upper mould with respect to a lower mould in a tyre press is effected by synchronous rotation between a centre gear positioned in the centre and a plurality of nut gears disposed to encircle the centre gear, whereby accurate synchronous motion is provided to precisely and stably obtain the adjustment of the height of the upper mould.

The present invention still further relates to a mould fastening device in a tyre vulcanizer.

The present invention relates to a platen type tyre vulcanizer for tyres used for trucks, buses and passenger vehicles, and more specifically to a tyre vulcanizer capable of centring and adjusting a lower platen having a heating source with respect to an upper platen.

The present invention finally relates to an improvement in a lifting-out device for lifting a vulcanized tyre out of a vulcanizing mould of the tyre vulcanizer, the device having means for holding the tyre safely without possible disengagement.

## Description of the Prior Art

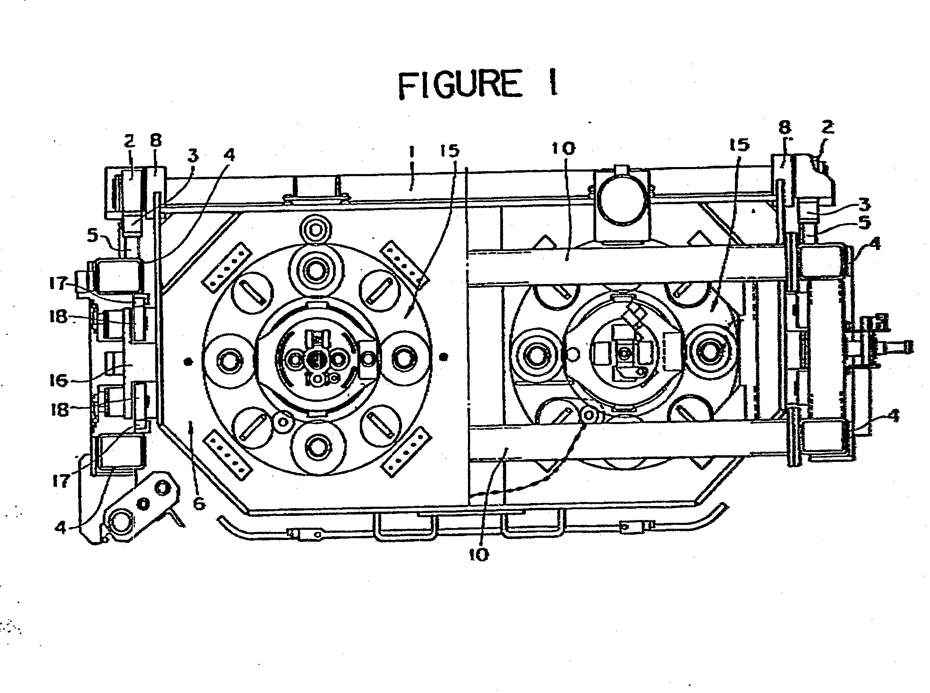

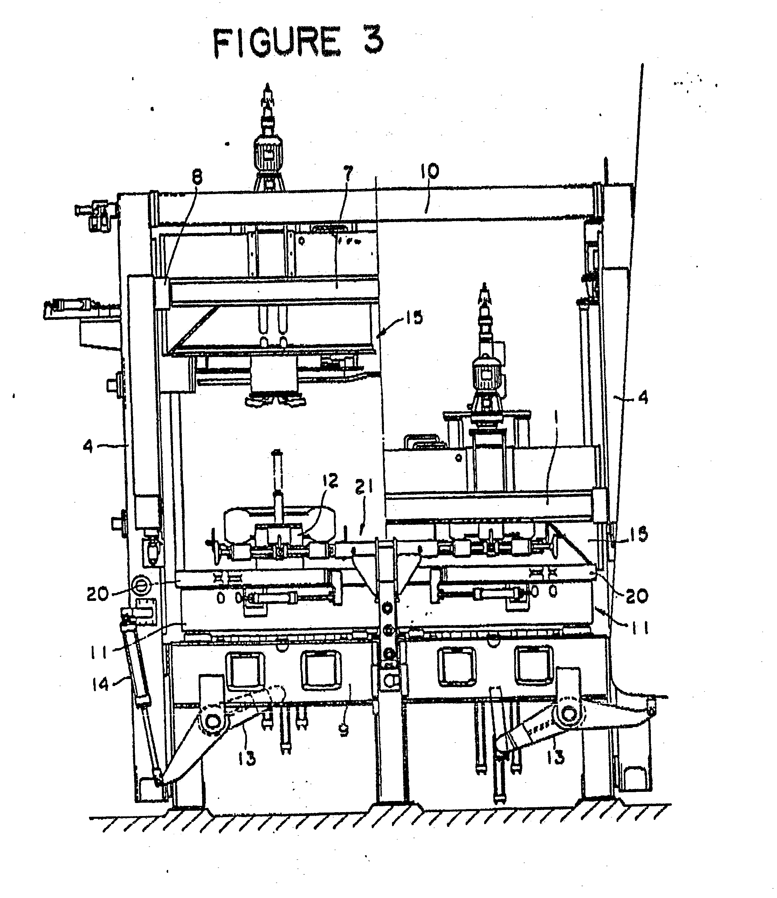

There is known, a tyre vulcanizer comprising a lower mould assembly secured onto a press base, an upper mould assembly held movably up and down on a press side frame which may be opened and closed with respect to the lower mould assembly, a moulding bladder expansible relative to a lower mould center mechanism, and a means for supplying a pressurized heating medium. This tyre vulcanizer will be briefly described with reference to Figures 1, 2 and 3 showing the tyre vulcanizer as an embodiment in accordance with the present invention. While the tyre vulcanizer shown in Figures 1, 2 and 3 is a twin type in which two sets of upper and lower mould assemblies are juxtaposed within a common press frame, it will be noted that a single type employing a single set of vulcanizing and moulding moulds or a multi-type employing more than two sets, for example, four sets is similar in basic construction to the twin type. The frame of the vulcanizer comprises side frames 4, 4 on both sides of a base 9 mounted horizontally above a floor 9, a top beam 10 connecting the upper ends of both the side frames 4, 4. A lower mould assembly 11 is fixedly mounted on the base 9, the lower mould assembly 11 comprising a lower dome (which is sometimes omitted), a lower platen having an insulator, a hot plate or the like, a lower mould mounted on the lower platen, and other parts not shown. An expansible bladder to effect moulding of the tyre and a centre mechanism comprising means for supplying a pressurized heating medium such as steam to the bladder are disposed in the centre (press centre) position of the lower mould assembly 11. Figure 3 shows a part of a centre mechanism 12 which has been moved upwards by a knock-out lever 13 provided on the side of the base 9, a driving cylinder 14 provided on the side frame 4 and the like. Similarly to the lower mould assembly 11, an upper mould assembly 15 comprises an upper dome (which is sometimes omitted), an upper platen comprising an insulator, a heat plate or the like, an upper mould mounted below the upper platen and the like. Generally, a centre mechanism comprising a height adjusting mechanism which varies a height of the upper mould is mounted so as to be movable up and down at a centre (press centre) position of the upper mould assembly 15. In opening and closing the upper mould assembly 15 with respect to the lower mould assembly 11 by the vertical movement thereof, a slide 16 is provided on the side toward the side frame 4 of a frame 6 (which sometimes comprises an upper dome) for supporting the entire upper mould assembly 15. Guide rollers 18, 19 make rolling contact with a guide rail provided on the side of the side frame 4 to prevent any inclination and the frame 17 is mounted on a piston rod 7a of a fluid pressure cylinder 7 installed on the side of the side frame 4. The frame 17 is thus moved up and down through the slide 16 by forward and backward movement of the piston rod 7a to open and close the upper mould assembly 15 with respect to the lower mould assembly 11.

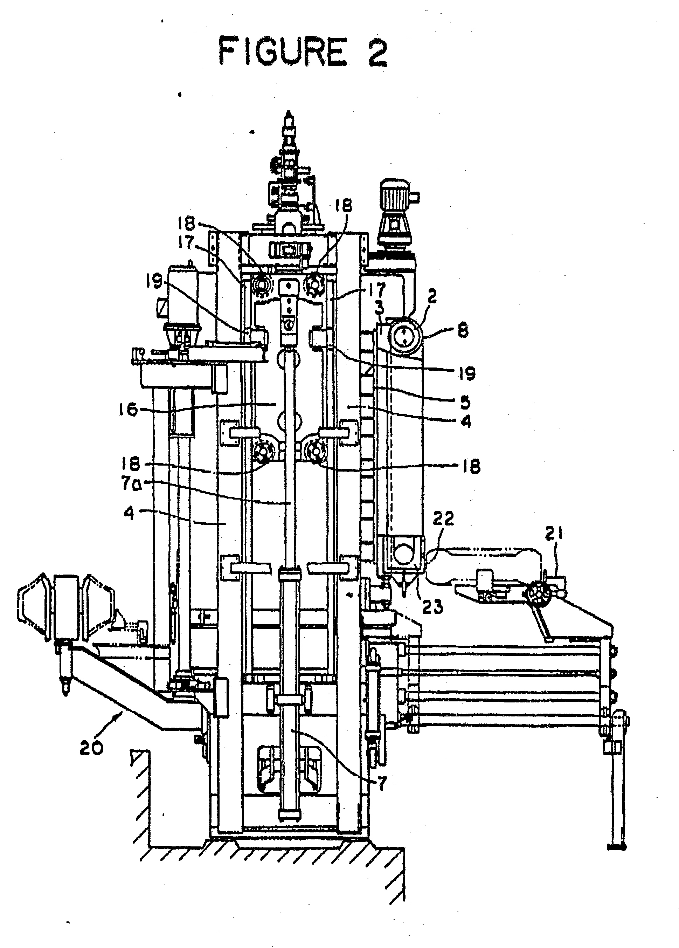

Thus, the upper mould assembly 15 is released with respect to the lower mould assembly 11 and moved upwardly. A green tyre is loaded into the lower mould of the lower mould assembly 11 by a tyre loader 19 or the like disposed on one side of the vulcanizer as shown in Figure 1. A moulding bladder is inserted into the inner surface of the green tyre. The upper mould assembly 15 is moved down to close the upper mould with respect to the lower mould, and the assemblies 11, 15 are clamped together by means of clamping rings 20 or the like shown in Figure 2. The moulds are then pressurized and heated to vulcanise and mould the tyres while the bladder is inflated and supplied with pressurized heating medium. After completion of vulcanizing and moulding, the upper mould assembly 15 is released and lifted, and the vulcanized tyre is removed from the lower mould and the bladder is taken out. The vulcanized tyre is received by a tyre unloader 21 as shown in Figure 3 and then conveyed out.

The above-described procedures are conventional. Although there are various changes in design and construction, the vertically opening and closing type tyre vulcanizer has the basic construction and function as described above.

The above-described vertically opening and closing type tyre vulcanizer has the merit of readily maintaining    the upper and lower moulds parallel. However, the recent .demand for keeping the moulds accurately parallel has become very severe, for example, in terms of numerical value, less than 0.2 mm/m, is required. A conventional system cannot easily cope with this severe demand. The motion mechanism for vertical upward and downward movement shown in Figures 1 to 3 is the fluid pressure cylinder 7. An alternative motion mechanism is a screw shaft which is reversibly rotatably mounted by bearings on the side of the side frame 4, and a ball screw nut provided on the slide 16, the ball screw nut being threadedly engaged with the screw shaft to effect vertical upward and downward movement. In use of either motion mechanism, the means for maintaining the moulds parallel is a slide guide member such as a guide rail 17 provided on the side of the side frame 4 and a plurality of spaced guide rollers 18, 19 disposed on the side of the slide 16 which engage with the slide guide member. The recent severe demand for accurate parallelism cannot easily be satisfied by such a slide guide construction as described above. During operation of the tyre vulcanizer, it is necessary to halfway close the upper and lower mould assemblies 15, 11, during which the green tyres are expanded by pressurized heating medium (steam) from the inside and the tyres are sealed and set into the upper and lower moulds. To maintain a high quality of tyre, particularly a uniformity and homogeneity of the tyre, it is important to properly maintain the parallelism of the upper and lower moulds. In the twin type press wherein two sets of mould assemblies are juxtaposed in a single press, as shown in Figures 1 to 3, the use of the slide guide system on the left and right side means that when the fluid pressure cylinders 7, 7 exert different thrusts (10% or so will be sufficient in view of experiences), or when only one unit on one side is used for vulcanization, when there will be resistance from the green tyre on one side only) the slide guide side receives an uneven force, thus making it difficult to retain the moulds in parallel relationship. In order to comply with the severe value less than 0.2 mm/m as previously noted, it is necessary to produce a design specification in which the left and right slide guides are parallel to within 0.05 mm. Thus a very rigid slide guide construction is required, which gives rise to a difficulty in terms of a space as well as installation, and in addition, requires control of the stroke of the fluid pressure cylinder.

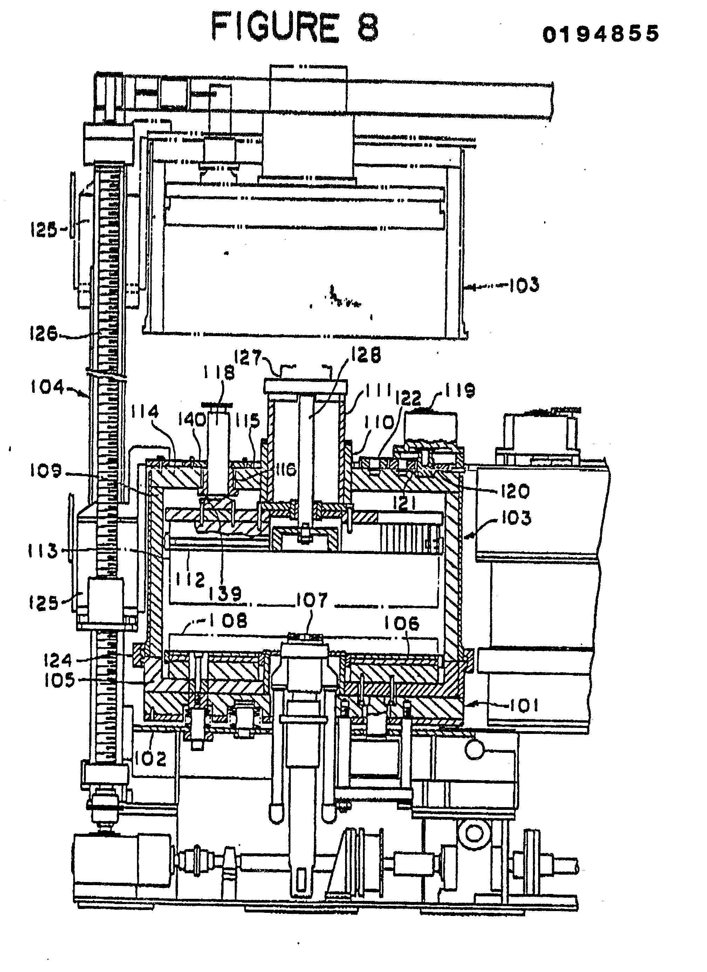

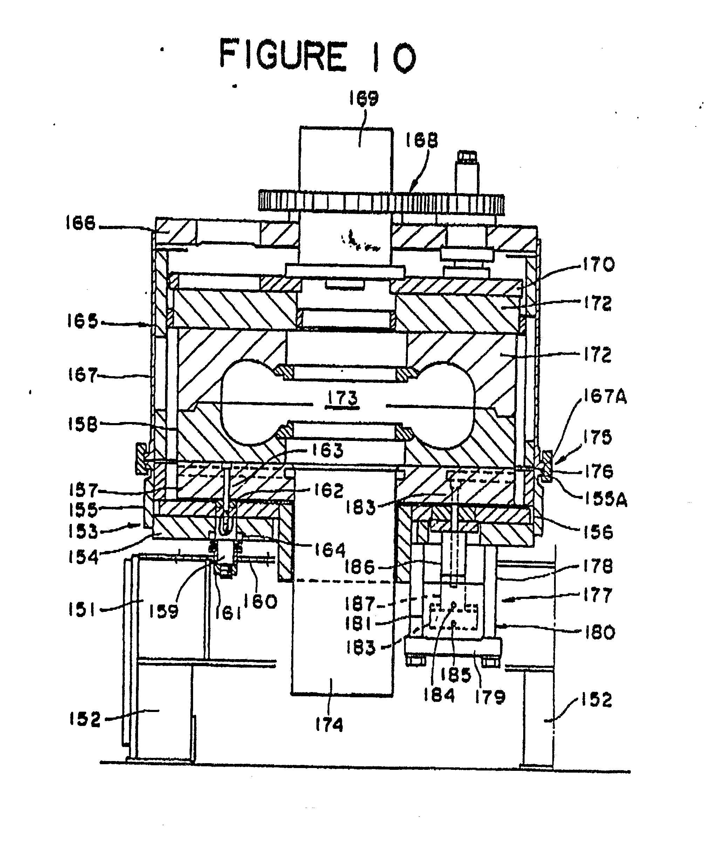

In a conventional mould-height adjusting device, in a tyre press wherein a lower mould assembly is installed on a press base, an upper mould assembly is held on the side of a press frame so that the upper mould assembly may be opened and closed with respect to the lower mould assembly, and green tyres are sealed between the upper and lower moulds and a moulding bladder provided in a centre mechanism of the lower mould assembly is inserted into the inside of the tyre while pressurized heating medium is supplied, thus effecting vulcanizing and moulding through heating of the upper and lower moulds, it is necessary that the spacing between the upper and lower moulds be made variable according to the size of tyres. In the prior art, the upper mould in the upper mould assembly is moved up and down to change the height of the upper mould, as schematically shown in Figures 8 and 9. Figure 8 shows the whole body of the upper and lower mould assemblies in the tyre press. A lower mould assembly 101 is secured to a base frame 102 in a press machine whereas an upper mould assembly 103 is installed on a side frame 104 in the press machine so that the assembly 103 may be moved up and down from a closed position as indicated by the solid line to an open position as indicated by the chain line, the upper mould assembly thus being opened and closed with respect to the lower mould assembly 101. Means for securing the lower mould assembly 101 and means for moving the upper mould assembly 103 upward and downward are well known and therefore will not be particularly mentioned. The lower mould assembly 101 is composed, as is known, of a lower dome 105, a lower platen 106 comprising a hot plate, an insulator or the like, a moulding bladder for the inner surface of a tyre, a centre mechanism 107 comprising means for supplying a pressurized heating medium such as steam, an expanding mechanism for the bladder, and a lower mould 108 secured onto the lower platen 106 and the like. The upper mould assembly 103 is also composed, as is known, of an upper dome 109 mounted so as to be movable up and down on the side of the side frame 104, a centre mechanism 111 slidably inserted into a guide support 110 provided at a press centre position of the upper dome 109, an upper platen 112 comprising a hot plate held on the centre mechanism 111, an insulator or the like, an upper mould 113 secured to the upper platen 112 and the like. In an adjusting device which adjusts the height of the upper mould 113 to meet the size of the green tyre, a ring-like centre gear 115 is rotatably mounted on the guide support 110 through a bush or the like at the top 114 of the upper dome 109, four (in the illustrated example) screw nuts 116 are peripherally equidistantly provided on the top 114 of the upper dome 109 encircling the centre gear 115, the top 114 is holdingly and rotatably disposed through a gear support 140 and a flange 139 provided on both upper and lower ends of the nut 116, and a nut gear 117 provided on the gear support 140 of each screw nut 116 is meshed with the centre gear 115. Each screw shaft 118 threadedly inserted into each of said screw nuts 116 is connected to the upper platen 112. Thus, according to the above-described construction, as the centre gear 115 rotates, each nut gear 117 is synchronously rotated, and the screw nut 116 integral with the nut gear 117 rotates at its position, whereby each screw shaft 118 is moved up and down through the normal and reverse rotation of the centre gear 115 along with the upper platen 112 to freely vary and adjust the position of the upper mould 113 secured to the upper platen 112. In prior art, in the normal and reverse rotation of the centre gear, 115, a power pinion 120 of a prime mover 119 such as a motor mounted on the top 114 of the upper dome 103 is brought into engagement with a reduction intermediate gear 121 mounted on the top 114 to bring the intermediate gear 121 into engagement with a driving pinion 122 likewise mounted on the top 114 and meshed with the centre gear 115 to thereby rotate the centre gear 115, or the driving pinion 122 as brought into engagement with one of four nut gears 117 whereby the centre gear 115 is rotated by the nut gear 117.

The prior art has the following problems. An area of the upper dome 110 in the upper mould assembly 103 is restricted and the centre mechanism 111 has a considerable diameter. Therefore, the remaining available area is further decreased, and a plurality of bolt mounting portions 123 for the moulds as shown in Figure 9 have to be provided in addition to installation of a plurality of screw nuts 116 and nut gears 117. Therefore, the direct engagement of the driving gear 122 shown in Figure 9 with the centre gear 115 to rotate the centre gear 115 is advantageous in provision of synchronous rotation of the nut gear 117 but the provision of the driving pinion 122 and intermediate gear 121 in the space left by the installation of the nut gear 117 and bolt mounting portions 123 involves careful design. In addition, the prime mover has to be installed in a restricted and difficult space and the size of the driving pinion 122 is restricted. Moreover, the engagement of the driving pinion 122 with the single nut gear 117 to rotate the centre gear 115 through the nut gear 117 does not cause difficulties in terms of space but the complete synchronous motion of each nut gear 117 is difficult to attain owing to backlash of the gear. This is disadvantageous in terms of accurate upward and downward movement of the upper mould.

The present applicant has previously proposed a mould fastening device for a tyre vulcanizer in Japanese Patent Application Laid-Open No. 138432/84.

This shows a tyre vulcanizer comprising a press base, a lower mould hollow portion and an upper mould hollow portion vertically movable toward the first-mentioned hollow portion, which are arranged opposedly of said base, a centre mechanism arranged in the centre of each upper and lower mould hollow portions, mechanical locking means for the upper and lower hollow portions, and mould pressing means for directly acting on the lower portions of the lower mould, a mould fastening device comprising means for securing the lower mould within the lower mould within the lower mould hollow portion to the press base, means for resiliently supporting said lower mould hollow portion on the press base and mould pressing means interposed between said lower mould hollow portion and the lower mould. This proposal is considered to be useful in its own way.

In the above-mentioned prior art, the lower mould hollow portion or cavity is resiliently supported

- 11 -    0194855

on the press base by means of flat springs or the like and therefore there is a problem in terms of durability. Furthermore,the use of springs means that stop position of the press varies which makes it difficult to set the fastening force and the height of the mould. Moreover, the position at which the press is totally closed is normally set by a limit switch or the like but flexing of the flat spring makes it impossible to accurately detect.

A tyre vulcanizer is known in which the outer circumferential surface of the green tyre is moulded by an openable and closeable mould device, and the inner circumferential surface of the green tyre is moulded through a bladder that may be inserted into the mould device.

A tyre vulcanizer of the type, in which a tyre is once placed on the upper mould in the mould device and thereafter the mould device is totally closed, is disclosed in US Patent No. 4,444,715 Specification.

In the above-mentioned conventional tyre vulcanizer, the centrality of the upper and lower platens must not only be repeatable but also absolutely accurate. Despite this requirement, the prior art vulcanizer is not provided with means for adjustment of the centrality of the upper and lower platens, that is, the centring of the lower mould to the upper mould, and therefore, a deviation in the mould device sometimes occurs.

The centring of the mould device need be adjusted during trial operation due to changes over the passage of time in addition to the aforementioned reasons. In the prior art, such an adjustment could not be attained by simple means.

There is known, without illustration, a tyre vulcanizer (a tyre press) in which a preformed green tyre is vulcanized and pressed to mould it. The vulcanizer of this type comprises a fixed lower mould and a upper mould which is openable and closeable with respect to the lower mould, the moulds being respectively provided with a heating source and disposed opposedly each other, a moulding bladder expansibly deformed to engage the inner surface of the tyre is provided in the centre of the lower mould through a bladder well or the like together with means for supplying a pressurized heating medium such as steam, the moulding bladder being pressed against the inner surface of the green tyre to shape it after closing the moulds and clamping them, whereby the heating of the moulds and vulcanizing and moulding of the green tyre by the heating medium are carried out. The vulcanized tyre is lifted from the surface of the lower mould, after the upper mould has been opened, or disengaged by pushing up, and carried out of the press machine from the lower mould to the succeeding treatment step by means of a tyre carrying-out device which is so-called a tyre unloader. The aforesaid tyre carrying-out device is needless to say known. In such a carrying-out device, normally, a support member (such as an arm for supporting the underside of the vulcanized tyre by a turning or linear motion from the outside of the press machine) is moved in and out of the centre of the press to lift the underside of the vulcanized tyre whilst maintaining the tyre horizontal attitude upwardly from the lower mould to carry the tyre out of the machine. The carrying-out device is provided with a stop to prevent the vulcanized tyre supported on the support member from being disengaged. The conventional stopper construction includes a system in which the side wall of the tyre is held from above when the tyre is removed from the bladder, or a system in which the side wall of the tyre is held from both top and bottom. In addition to these systems, there is a system in which the removed tyre is located by the centring means.

The conventional stops are complicated and there is a problem in that the side walls of the tyre are held directly. More specifically, since the height of the tyre varies according to the tyre size, adjusting means is required which is expansible with respect to the tyre. Further, scratches may be made in the side wall surfaces of the tyre which is not sufficiently hardened immediately after vulcanization to resist scratching. In many cases, a main object of the carrying-out device of the type as described is to remove a tyre from the inside to the outside of the press machine. In transfering the tyre from the outside of the press machine to the next station, a tyre mounted on the carryout device is gripped by a separate gripping means to move it to a conveying means such as a conveyor. Therefore, the presence of the stop at the upper surface or lower surface of the side wall surface of the tyre comprises an obstacle when the tyre is to be gripped by the tyre gripping means.

In accordance with a first aspect of the invention of the present application, for solving the aforesaid problems, a conventional construction and type are employed, without requiring a basic modification of the slide guide construction, and a new construction is added thereto thereby positively and easily to maintain a high degree of parallelism of the moulds. More specifically, in accordance with the first invention there is provided a tyre vulcanizer comprising a lower mould assembly secured to a press base, an upper mould assembly mounted so as to be moveable up and down on a press side frame and provided to be opened and closed with respect to said lower mould assembly, a moulding bladder expansible with respect to a centre mechanism of the lower mould assembly and pressurized heating medium supplying means, characterized in that a torsion shaft is provided for maintaining the upper and lower mould assemblies parallel, the torsion bar being movable up and down and rotatable about an axis in synchronism with the upper mould assembly and being mounted parallel to the press base, at a right angle to the side frame and so as not to interfere with the upper and lower mould assemblies.

In accordance with a second aspect of the invention, there is further provided a tyre vulcanizer in which a lower mould assembly is mounted on a press base, an upper mould assembly is held to be opened and closed with respect to said lower mould assembly on the side of a press frame, and screw shafts disposed on a mould supporting platen in a circumferentially equidistant fashion surrounding a centre mechanism of an assembly and nut gears provided adjustably in height through screw nuts threadedly engaged with said screw shafts at the top of an assembly dome and mounted on said screw nuts are synchronously drived by a centre gear provided at the top of the dome concentric with said centre mechanism, characterized in that there is provided an idle gear meshed with the centre gear coaxial with a nut gear meshed with said centre gear, said idle gear being operatively connected to a driving gear on the side of a prime mover. In accordance with a third aspect of the invention, there is provided a tyre vulcanizer comprising a press base, a lower mould cavity and an upper mould cavity vertically movable toward said lower mould cavity, both cavities being mounted opposedly on said press base, mechanical locking means for the upper and lower mould cavities, a respective centre mechanism arranged at the centre of the upper and lower mould cavities and mould pressing means directly acting on the lower portion of the lower mould, characterized in that the mould pressing means comprises a cylinder tube, a piston fitted therein and pressurized medium supplying means capable of supplying and discharging liquid pressure relative to both upper and lower surfaces of said piston, said cylinder tube is provided below the lower mould cavity through a mounting element, and said piston side is connected to the lower mould side. In accordance with a fourth aspect of the invention, there is provided a tyre vulcanizer in which platens each having a heating source are detachably mounted on opposite surfaces of vertically opposedly arranged platen supports, each platen being provided with an upper mould and a lower mould to form an openable and closeable mould device for moulding an outer peripheral surface of a green tyre, and a centre mechanism which is insertable into a green tyre and has a bladder for moulding an inner peripheral surface of a green tyre, characterized in that radially arranged arms are mounted on the outer peripheral portion of the lower platen support, said arms each being projected upwardly and corresponding to the outer peripheral surface of the lower platen in a diameteral direction, tapped holes are radially extended through said corresponding portion, a push bolt is threadedly engaged with said tapped hole through a lock nut so that the bolt may be fixed movably forward and backward in a direction of a bolt axis and the end of said bolt may be placed in contact with the outer peripheral surface of the lower platen, and the centre mechanism is mounted while being positioned to the lower platen. In accordance with a fifth aspect of the invention, there is provided a tyre vulcanizer comprising a carrying-out device for a vulcanized tyre arrayed to be movable into and out of a vulcanizing mould, characterized in that a plurality of radially movable and securable guide stops are provided at a tyre support portion of said carrying-out device surrounding a tread portion of the tyre.

BRIEF DESCRIPTION OF THE DRAWINGS

Figure 1 is a plan view of a twin tyre vulcanizer using an embodiment of the device according to the present invention;

Figure 2 is a side view of the same;

Figure 3 is a front view as viewed from the rear side thereof;

Figure 4 is a plan view of a mould-height adjusting device according to the present invention;

Figure 5 is a sectional view taken along line A-A of Figure 4;

Figure 6 is a sectional view taken on line C-C of Figure 4;

Figure 7 is a sectional view taken on line D-D of Figure 4;

Figure 8 is a longitudinal sectional front view showing one example of a tyre press;

Figure 9 is a plan view showing one example of a conventional height adjusting device;

Figure 10 is a vertical sectional view showing essential parts as a part of a tyre vulcanizer;

Figure 11 is a plan view showing essential parts of Figure 10;

Figure 12 is a vertical sectional view showing essential parts of a tyre vulcanizer;

Figure 13 is an enlarged view of a portion as indicated by arrow A in Figure 12;

Figure 14 is a plan view with a part omitted;

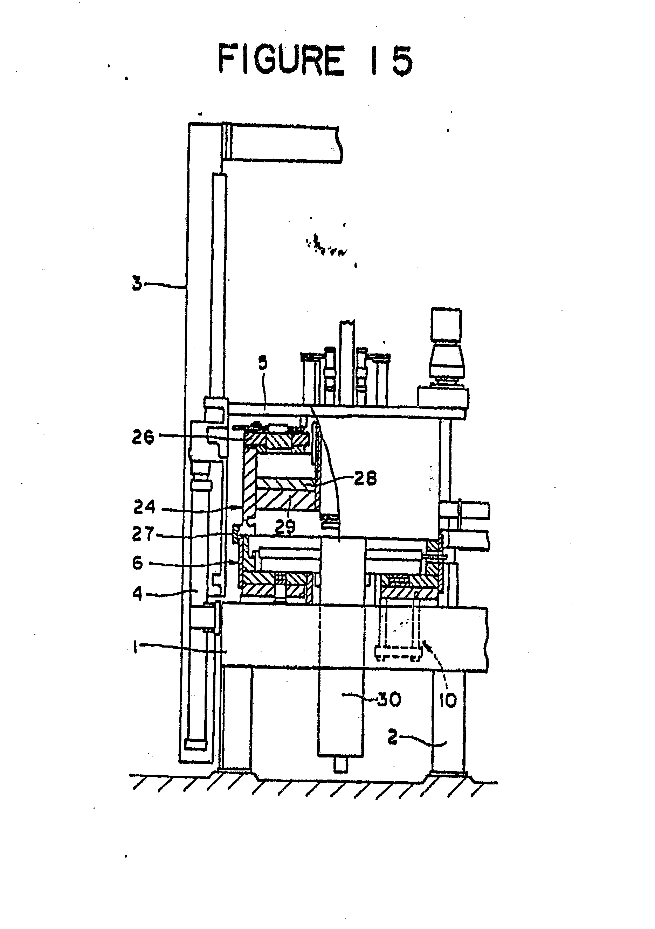

Figure 15 is a vertical view with a part omitted showing the entire construction of the tire vulcanizer;

Figure 16 is a plan view of a tyre carrying-out device;

Figure 17 is a front view of the same;

Figure 18 is a side view of the same; and

Figure 19 is a partly cutaway plan view showing the detailed construction of a portion A of Figure 16.

DETAILED DESCRIPTION OF THE INVENTION AND PREFERRED EMBODIMENTS

According to the present invention, a slide 16 is integrally provided externally of a frame 6 for supporting the whole of an upper mould assembly 11, and a plurality of guide rollers 18, 19 in contact with and are supported on a guide rail 17, the slide 16 being provided on the side of a side frame 4. Said guide rollers 18, 19 are movable up and down. A tyre unloader 21 is mounted at the rear of the press opposite to a tyre loader 20. Bearing blocks 8, 8 are provided on opposite ends of the rear surfaces of the frame 6, and a torsion shaft 1 is mounted parallel to a base 9 over the bearing blocks 8, 8, horizontally and at a right angle to side frames 4, 4, Shift 1 is rotatably journalled in bearing blocks 8 and pinions 2, 2 are secured to opposite ends of the shaft 1, said pinions 2, 2 being engaged with racks 3, 3 mounted vertically on a support 5 externally of the side frame 4. The torsion shaft 1 is moved during vertical operation for opening and closing the assembly 15 together with the slide 16 and the frame 6, i.e., in synchronism with the upper mould assembly 15 integral with the frame 6 and is rotated around its axis by the pinions 2, 2 engaging the rack 3, 3 surfaces. Thus the left and right slides 16, 16 and fluid pressure cylinders 7, 7 are synchronised with each other by the torsion shaft 1, over the entire opening and closing movement of the upper mould assembly 15. Thus the movable upper mould and fixed lower mould are maintained parallel to the required high degree of accuracy. By properly setting the diameter of the torsion shaft 1, the above-described strict accuracy of parallelism to less than 0.2 mm/m can be satisfied using the conventional slide guide construction without further modification.

A support portion 23 also serving as a stop for the shaft 1 is provided at the lowest end of the rack 3 in the lowest position of the torsion shaft 1 corresponding to the closed position of the upper mould assembly 15 by means of a bracket 22 or the like.

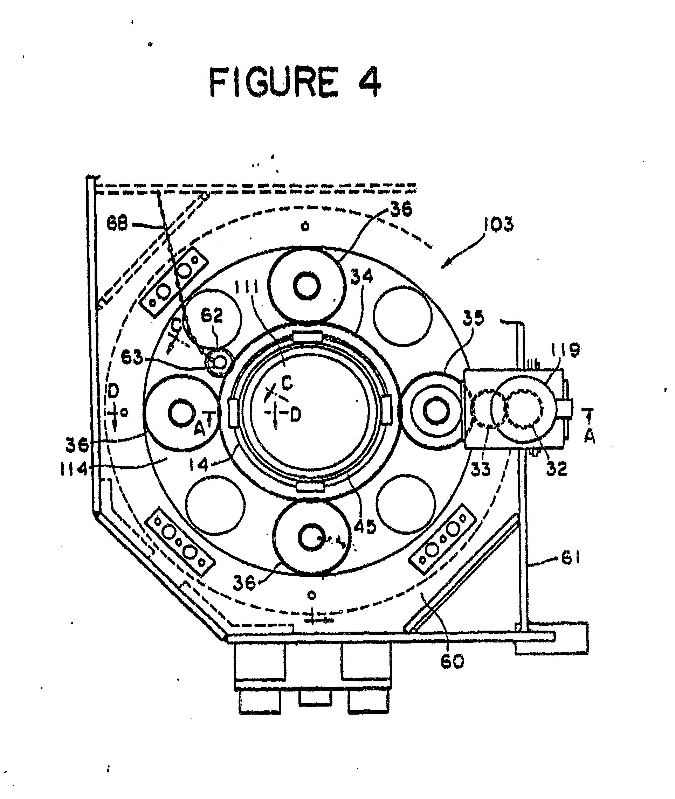

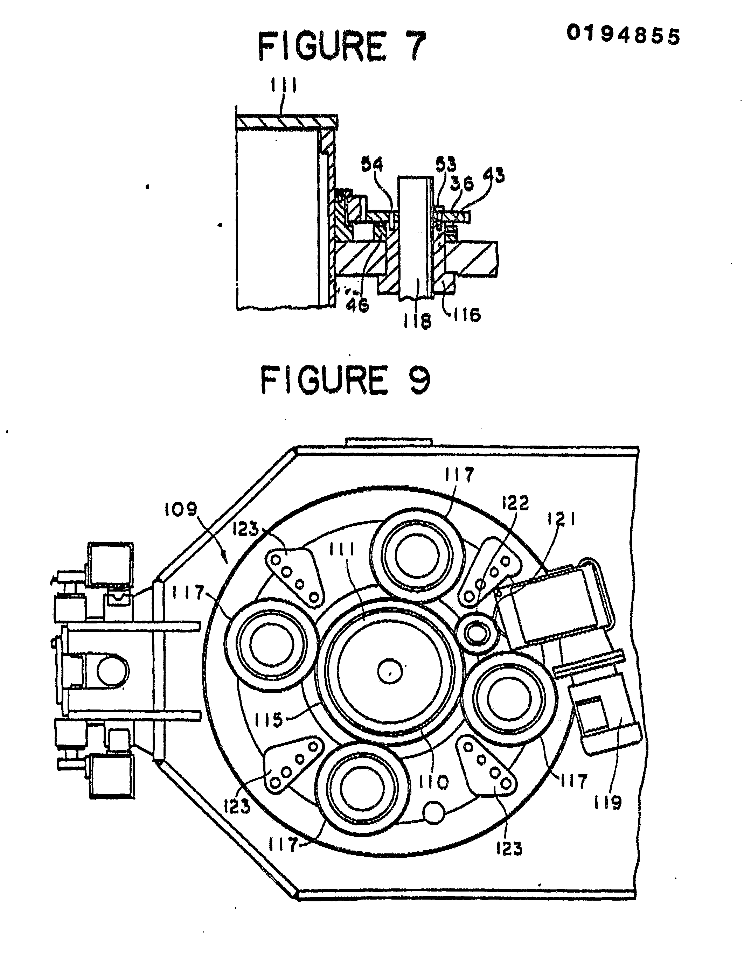

According to Figures 4 to 7, a centre mechanism 111 is slidably provided at a centre position of a top 114 of an upper dome 109 in an upper dome assembly 103 and a plurality of screw nuts 116 are rotatably disposed at the top 114 at peripherally equidistant positions surrounding the centre mechanism 111 and a screw shaft 118 is threadedly inserted into each screw nut 116 for vertical movement in a similar manner to that already known. In the present invention, however, a centre gear 34 is rotatably mounted through a bush 44 or the like on a gear support 45 disposed on the top 114 side surrounding the centre mechanism, and an idle gear 37 is coaxially superposed above a nut gear 35 meshed with the centre gear 44 and provided on the screw nut 116 side, the idle gear 37 being likewise meshed with the centre gear 37. Intermediate gears 33, 33 are used which are provided at upper and lower portions of an intermediate shaft 39 rotatably mounted through a bush 40 on a shaft support 41 provided on the bracket 31 so that the upper intermediate gear 33 is engaged with a driving gear 32 of a motor 119 or a prime mover installed on a motor bracket 31 mounted on a wall 61 of a plate 60 attached to the top 114, and the lower intermediate gear 33 is engaged with the idle gear 37. A nut gear 36 is provided on each of other screw nuts 116 of the nut gear 35 and is brought into engagement with the centre gear 34 as shown in Figure 7.

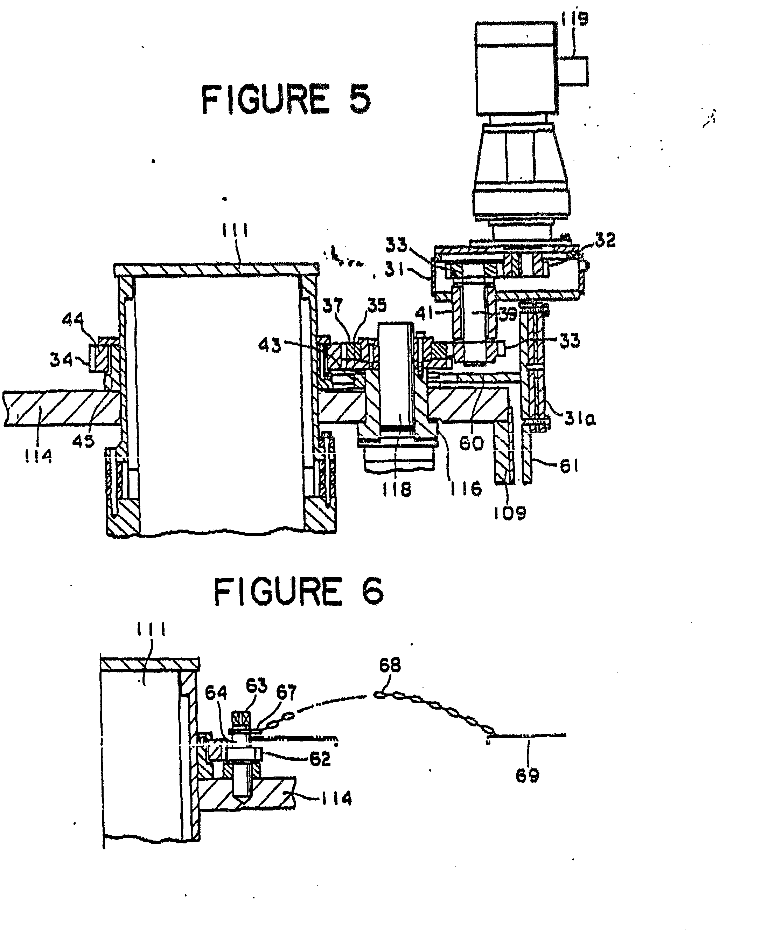

The apparatus operates as follows. That is, to move the upper mould 113 in the upper mould assembly 103 upward and downward for adjustment of the height, the motor 119 is rotated with the driving gear 32 either normally or reversely. The gear 32 is interlocked with the upper and lower gears 33, 33 of the intermediate shaft 39, and the centre gear 34 is directly rotated by the idle gear 37. The nut gears 35, 36, 36, 36 are accurately synchronously driven through the rotation of the centre gear 34 by the idle gear 37, and the screw shafts 118 are moved up and down at the same time by either normal or reverse rotation of the screw nuts 116. With this, the upper mould 113 is accurately and stably moved up and down through the upper platen 112 with the screw shafts 118 connected thereto to easily adjust the height with accuracy and high precision. According to the aforesaid arrangement, the idle gear 37 for directly rotating the centre gear 34 and the single nut gear 35 are coaxially disposed and the idle gear 37 is connected to the driving gear 32 on the prime mover side to thereby eliminate the inaccuracy of the synchronous motion resulting from the driving of the centre gear 34 by the nut gear and to impart a synchronous motion to the nut gears 35, 36 and screw shafts 118. In terms of space occupied by the single nut gear 35 so that there is no difficulty in securing a space for installation of the idle gear 37 in the limited space in the top 114 of the upper dome 109. Thus freedom in design and sufficient space may be obtained for the engagement the nut gears 35, 36 on the top 114, the bolt mounting portions of the moulds, and the motor 119, etc., with sufficient space. For example, as shown in Figures 4 and 6, the gear may be mounted on the top 114 together with a shaft 64 provided at an engaging head 33 with a jack pinion 62 for manually rotating the centre gear 34 in case of trouble with the motor, a power failure or other problems.

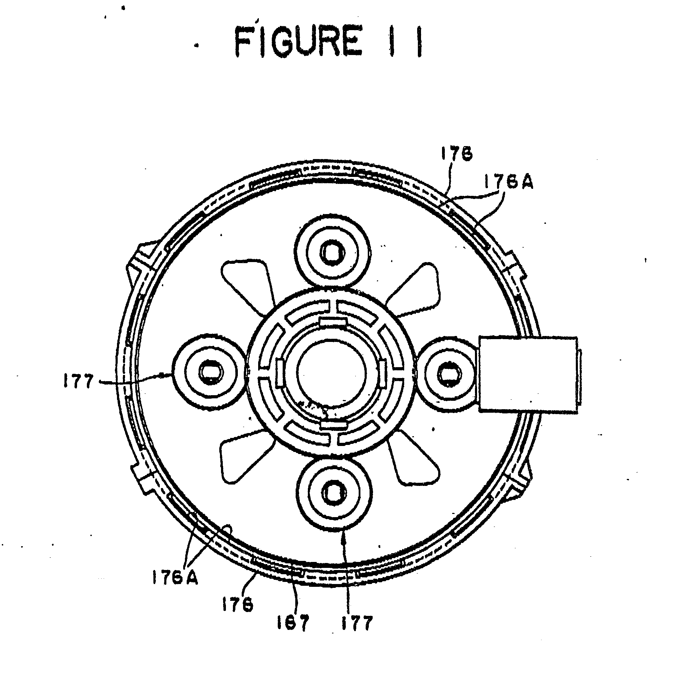

When liquid pressure is supplied to the lower surface side of a piston 183 (see Figures 10 and 11) through a liquid-feed means when the upper mould cavity 165 and a lower mould cavity 153 are connected by mechanical locking means 175, a cylinder tube 181 is moved down since a lower platen 157 is mounted on a base 151 by a support shaft. The upper mould cavity 165 and the lower mould cavity 153 are also moved down to produce a fastening force between upper and lower moulds 158 and 172.

On the other hand, in the absence of this pressure, liquid pressure is supplied to the upepr side of the piston 183 through liquid-feed means 185, the lower mould cavity 153 in moved up and comes into contact with the upper mould cavity 165 to form a clearance between a lock ring 176 of the mechanical locking means 175 and the upper and mechanical locking means 175 and the upper and lower mould cavities 153, 165 thereby making it possible to rotate the lock ring 176.

The centering adjustment of the lower platen 216 with respect to an upper platen 229 in a diametral direction is carried out by loosening a mounting bolt 217 for the lower platen moving one push bolt 221 which corresponds to the other push bolt 221 in the diametral direction in an inner diametral direction whereas rearwardly moving the other push bolt in an outer diametral direction whereby moving the lower platen 216.

After the accuracy of centring has been confirmed the bolt 217 is tightened, and the push bolt 221 is locked by a lock nut 222 thus terminating the centring.

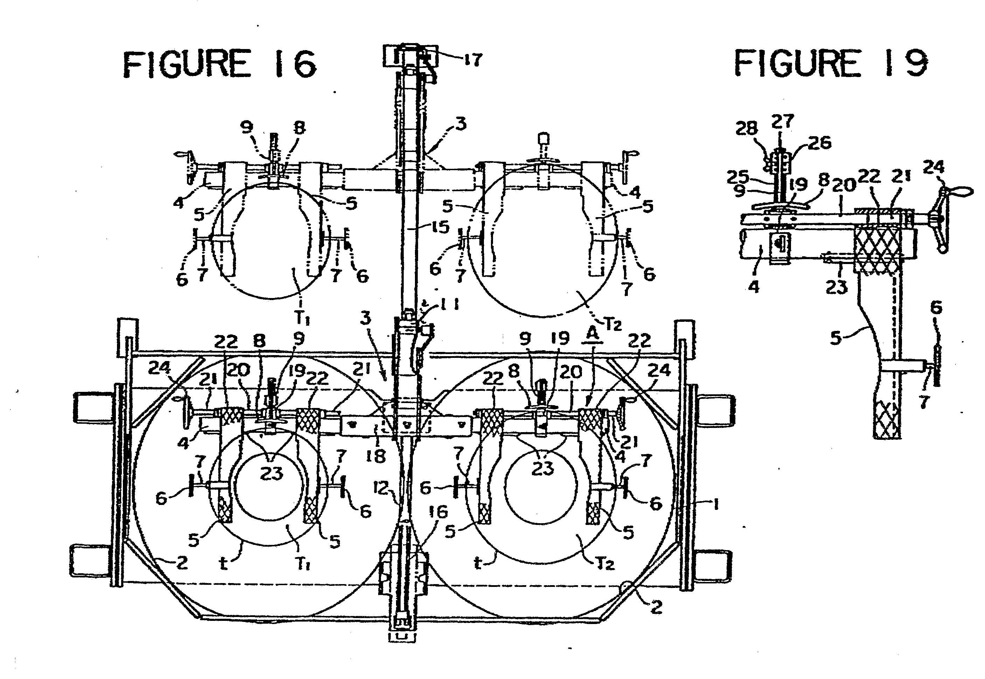

As shown in Figures 16 to 19, a body 253 of the tire carrying out device moved into and out of the machine toward a lower mold 252 arranged on a base 251 in a known tire vulcanizer, a pair of support arms 255,255 are provided movably forward and backward in a direction opposite to each other along a support body 254 branched from the body 253 to support a bottom (a lower side wall portion) of a vulcanized tire T raised or pushed up from the lower mold 252 in a manner such that said support arms are parallel to each other and a spacing therebetween may be varied according to the size of the diameter of the tire T. These support arms 255,255 are utilized so that guide stoppers 256, diametrally opposed to symmetrical peripheral sides (both left and right sides) of a tire tread portion t of the tire T are provided in an upright state through brackets 257, or the like externally of both the arms 255, 255 and a guide stopper 256 diametrally opposed to the peripheral side (rear surface) of the tread portion t of the tire T is provided in an upright state through a bracket 257 or the like in the central portion of said support body 254 at the intermediate position between both the guide stoppers 258, The pair of guide stoppers 256 , 256 provided externally of the support arms 255, 255 are variable in distance to the center of the tire so that as shown on the left side of Figure 16 , when the diameter of the vulcanized tire $T_1$ is small, both the arms 255, 255 are moved at the time of access movement of the arms 255,255 toward the center corresponding therto whereas as shown on the right side of Figure 16 ,

when the diameter of the vulcanized tire $T_2$ is large, both

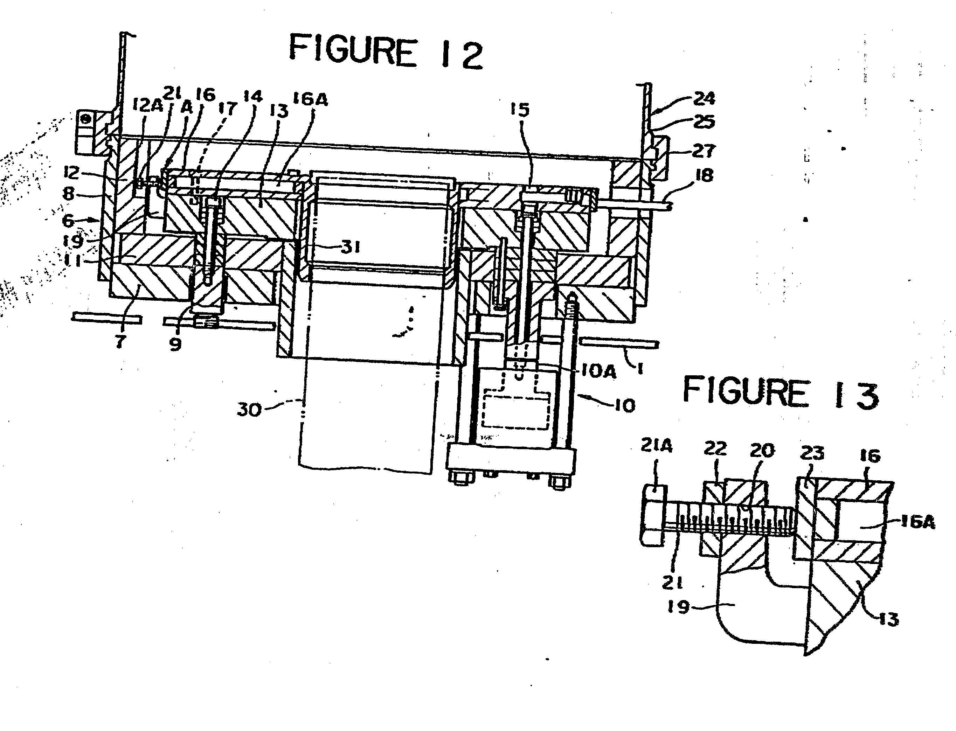

the arms 255, 255 are moved at the same time as the parting movement of the arms 255, 255 from the center of the tire corresponding thereto to change the position thereof.  On the other hand, the guide stopper 258 at the rear surface is likewise provided to be movable toward and away from the center of the tire by hands or the like since the stopper is provided on the side of the support body 254.  The stoppers 256, 256 and 258 may be of either straight wall or bended wall but should have its height which is lower than that of the tread portion t either to the smallest tire $T_1$ or

the largest tire $T_2$ as shown in Figure 13, that is, which is not to be projected above the upper surface of the tire.

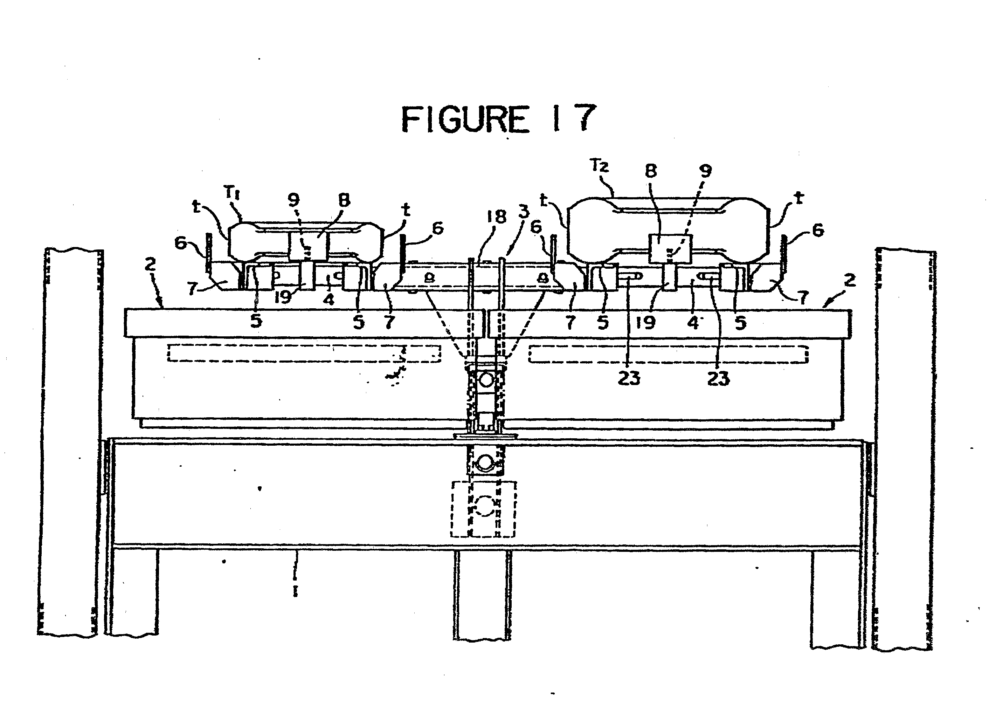

Accordingly, in Figure 16, during the vulcanization of the tire, the tire carrying-out device body 253 is moved to the backward position as shown by the chain line, and after the vulcanization of the tire, i.e., after the upper mold has been opened as is known, the vulcanized tire T on the lower mold 252 is pushed up in a horizontal attitude above the lower mold 252 as shown in Figures 16 and 17 through the removal of the bladder and upward movement of the bladder well or the like.  At the same time, the device 253 is moved from the position indicated by the chain line in Figure 16 to the position indicated by the solid line whereby the bottom of the tire T is supported on the pair of support arms 255 and 255 and the guide stoppers 256, 256, 258 are diametrally opposed externally of the tread portions t on both sides of the tire T and the tread portion t on the rear side whereby the device 253 is moved from the position indicated by the solid line to the position indicated by the chain line in Figure 16 to thereby prevent occurrence of an accident such as disengagement of the tire T from the support arms 255, 255 during the carrying-out of the tire T.

In addition, in transferring the tire from the carrying-out point at a position indicated by the chain line to the conveyor for the next step, for example, even in moving the tire T while gripping it by tire gripping means for gripping an upper bead portion of the tire T, since the guide stoppers 256, 256, 258 are lower in height than the tire tread portion t, there is no possiblity at all that the stoppers extend above the upper surface of the tire and the gripping motion of the tire gripping means is impaired. While in the illustrated embodiment, the guide stoppers 256, 256, 258 are not in direct contact with away from the tire tread portion t by a small clearance, it is to be noted that they are not always necessary to contact with each other but it will suffice to restrain the tire T within a certain range to check a further play thereof. Normally, the carrying-out device of this kind is not designed to move a long distance but a relatively short distance from the position of the mold to the outside of the vulcanizer, and the movement for the long distance is effected by a separate tire gripping means while gripping the tire. Therefore, the guide stoppers are not necessary for forcible contact but can be of course placed in contact and supported. That is, according to the construction of the guide stopper of the present invention, in the vulcanized tire T, the side wall portions which are thin in wall-thickness and small in rigidity as compared with those of the tread portion are pressed and held to safely restrain the tire by the plurality of the guide stoppers 256, 256, 258 arranged externally of the tread portion t without producing a deformation or scratches as encountered in prior art. Moreover, in transferring the tire by the separate tire gripping means, the guide stoppers need not be withdrawn or the like, and no trouble in gripping motion or the mechanism occurs. At least two guide stoppers 256, 256 on both sides are moved together utilizing the spacing varying construction of the support arms 255,255 in the carrying-out device to provide for easy adjustment, and therefore, a separate adjusting means is not required and the construction may be simplified.

Reference is made to Figures 1, 2 and 3. The present invention may be applied to any type of tyre vulcanizer of the type in which the upper mould assembly 15 is moved up and down with respect to the lower mould assembly 11 through the frame 6 and the slide 16 so that it may be opened and closed. For the internal assembly construction of the upper and lower mould assemblies 15, 11, various constructions of a conventional tyre vulcanizer may be freely employed, which are therefore omitted from detailed explanation. The upper and lower moulds may be of the type in which the mould is divided into two sections from a central position of a tyre tread portion or of the type in which the lower mould comprises only a single tyre side wall and the upper mould is divided into two sections, one to mould a side wall portion and the other to mould a tread portion. For carrying in a green tyre and lifting out a vulcanized tyre, devices and mechanisms other than the illustrated tyre loader 19 and the tyre unloader 21 may be used. Although the twin type is shown, a single or a multi-type may also be used. In the case of the illustrated twin type, the frame 6 extends over the two upper mould assemblies 15, 15 or is connected by a connecting beam. The frame 6 can be similar to one heretofore known as a top slide, including one in which the slide 16 is connected to the upper dome itself.

The torsion shaft 1 need not be formed of a material having a high rigidity and may have a suitable sectional shape. However, the diameter of the shaft 1 should be suitable for the size of the vulcanizer. The integrated construction of the slide 16, frame 6, torsion shaft 1 and the upper mould assembly 15 can be different from those illustrated. A construction other than the rack 3 and pinion 2 may be used if it has the same effect of synchronous movement and rotation.

The present invention is excellent in solving the difficult problem of meeting the demand of strict parallelism which is required by a conventional tyre vulcanizer of the type in which upper mould is vertically opened and closed. It has been confirmed as the result of practice that in a conventional vulcanizer in which the upper and lower moulds (upper and lower platens) are maintained parallel to less than 0.2 mm/m the addition of the torsion shaft 1 improves this to less than 0.05 mm.

More specifically, imbalance and unevenness resulting from independent operation of the left and right slide guide portions are eliminated by the torsion shaft 1 which rigidly connects both portions. As the result, in the twin type vulcanizer as illustrated, even if only the press cavity on one side is operated to effect vulcanization, the required high degree of parallelism is maintained. Moreover, according to the technical means of the present invention, the conventional slide guide construction is utilized without modification, and an increase in rigidity of the press frame and an increase in size of the slide are not required. Thus, the demand for a high degree of parallelism can be satisfied by a construction with a relatively low rigidity, as a consequence of which the precision of the vulcanizer may be enhanced. Accordingly, the present invention is realistic and greatly advantageous.

Reference is made to Figures 4 to 7. In the illustrated embodiment, in slidably providing the centre mechanism 111 in the centre of the top 114 of the upper dome 109, an inserting hole 40 is made in the centre position of the tip 114 and a gear support 45 is erected on the upper surface of the top at the position of the hole 40. In this case, however, a bracket 110 shown in Figure 8 may be used. In providing the nut gear 5 and the idle gear 7 on the screw nut 116 in a coaxial and superposed manner, in the embodiment shown in Figure 5, the nut 35 is arranged through a thrust ring 43 on a support 46 provided on the upper end of the screw nut 116.

A support 38 is coaxially mounted on the gear 35 by a bolt 51, the idle gear 37 is mounted on the support 38, and the support 38, nut gear 35 and screw nut 116 are integrally fastened by means of separate bolts 52. The gear 35 and support 38 are loosely fitted on the screw shaft 118. Of course, this mounting construction is a mere example and constructions other than that shown may be used. A motor bracket 31 is of generally box-like form including a cover plate 47, and a mounting portion 31a projecting from the lower surface of the bracket 31 is fastened and secured to the wall 31 side by means of a bolt or the like. On a jack pinion 62 shown in Figure 6, reference numeral 68 designates a chain provided through a clip 67, and numeral 69 designates a cover held on the chain 68. Figure 7 shows a nut gear other than the nut gear 35 shown in Figure 8 in which case, the gear 35 is secured through a thrust ring 43 to the screw nut 116 by means of a parallel pin 54 and a fastening bolt 53. In the tyre press shown in Figure 4, reference numeral 124 designates a known clamp ring for disengageably clamping upper and lower domes 109, 105 when the upper and lower mould assemblies 101, 103 are closed, and numeral 125 designates a lift connected to the upper dome assembly 103. A ball screw nut (not shown) which threadedly engages the screw shaft 126 on the side frame 104 is provided on the lift 125 to effect vertical movement.

A fluid pressure cylinder 127 is installed on the top of the centre mechanism 115, and a piston rod 128 thereof extends through the centre mechanism 111 and is connected to the upper mould 113, which parts are well known.

The present invention is excellent in eliminating the disadvantages encountered in the prior art such as the type of press in which the centre gear is directly driven by a pinion gear and the type of press in which it is driven by use of a nut gear. More specifically, in the pinion type, the centre gear is connected through the prime gear on the side of the prime mover and the intermediate gear and is provided at a position separately from the nut gear. On the other hand, in the present invention, the idle gear 37 is coaxially and superposedly provided concentric with the single nut gear 35 to thereby completely eliminate the necessity for a separate space for installation of the gear. Thus the disadvantages of the prior arrangement in terms of a greatly restricted space for various parts in the upper dome top 114 are eliminated. A large diameter of driving pinion may be employed. Positive driving may be obtained and a freedom of design may be secured. For the driving system making use of the nut gear, completely synchronous operation may be secured to thereby allow adjustment of the height of the upper mould with high accuracy. Thus, the invention solves problems encountered in adjusting the height of the upper mould.

In Figure 10, reference numeral 151 designates a press base, which is fixed on the horizontal surface through legs 152.

A lower mould cavity 153 or a lower dome comprises a bottom plate 154 and a body 155 standing upright around the outer peripery of the bottom plate. A lower platen 157 is mounted within the cavity 153 by an heat insulating material and a lower mould 158 for moulding an outer circumferential surface of a green tyre is detachably secured to the lower platen 157.

A support shaft 159 is inserted into a support bracket 160 secured to the press base 151 and fastened by a nut 161. This support shaft 159 is inserted into the bottom plate 154 of the lower mould cavity 153. A bolt 163 is mounted through a heat insulating material 162 and the lower platen 157 is supported on the base 151 side.

A plate spring 164 is placed over the support shaft 159 to act as a damper.

A plurality of support shafts 159 are provided at equal angles around the circumference of the press.

A upper mould cavity 165 comprises a top 166 mounted on the unshown top slide and a body 167 connected to the top 166, which cavity corresponds to and is coaxial with the lower mould cavity 163. The upper mould cavity 165 is mounted so as to be moveable in a vertical direction by a cylinder or a ball screw shaft, a threaded shaft or the like not shown.

A mould-height adjusting mechanism 168 is provided on the top 16 of the upper mould cavity 165. An upper platen 171 is mounted on a centre post 169 of the mechanism 168 and an upper mould 172 is provided on the platen 171.

Accordingly, when the upper mould 172 and the lower mould 158 are closed together a cavity 173 for moulding the outer circumferential shape of a green tyre is formed.

Reference numeral 174 denotes a centre mechanism mounted in the centre of the press, detail of which is omitted. The centre mechanism has a bladder which can be inserted into the cavity 173 and expanded, and the shape of the inner circumferential surface of the type may be moulded by the internal pressure thereof.

Reference numeral 175 designates mechanical locking means, which comprises a lock ring 176 around the periphery of which is formed alternate concave and convex portions 176A as shown in Figure 11. An open edge 155A of the body 155 in the lower mould cavity 153 and an open edge 167A of the body 167 in the upper mould cavity 165 are engaged, in which state the lock ring 176 provided between these open edges is rotated whereby both the edges may be locked or released.

The rotation of the lock ring 176 is effected by a cylinder or the like not shown.

Reference numeral 177 designates mould pressing means, four of which are equally spaced at intervals of $90^{\circ}$ in the illustrated embodiment, around a circumference as shown in Figure 11.

More specifically, a mounting member 180 composed of four tie rods 178 and end plates 179 are provided on the undersurface of the bottom plate 154 in the lower mould cavity 153. A cylinder tube 181 surrounded by the tie rods 178 is mounted on the end plates 179 by means of bolts. A piston 183 is fitted into the cylinder tube 181, and pressurized liquid-feed means 184, 185 for feeding oil pressure to both upper and lower surfaces of the piston 183 are provided on the tube 181.

A push rod 186 is fixedly mounted on the lower surface of the heat insulator 156, the axis of the push rod 186 is brought into registration with that of a piston rod 187 connected to the piston 183. A mounting bolt 188 inserted into the lower platen 157 extends through the push rod 186 and is screwed into the piston rod 187.

Accordingly, the upper mould cavity 165 is moved down by the mould opening and closing mechanism (not shown) to register the upper mould 172 with the lower mould 158 to thereby form the cavity 173 for moulding the outer circumferential surface of the green tyre, and the open edges of the upper mould cavity 165 and lower mould cavity 158 are clamped by the lock ring 176.

The bladder of the centre mechanism 174 is inserted into the cavity 173 and the heating medium such as steam is fed into the bladder, and the heating sources for the lower platen 157 and the upper platen 171 are operated to vulcanize and mould the green tyre within the cavity 173.

In this case, the upper and lower moulds 158, 172 need to generate a clamping force greater than the internal pressure, which is provided, as previously mentioned, by the oil pressure acting on the lower side of the piston 183 from the liquid-feed means 185 in the mould pressuring means 177. The lock ring 26 may be turned as previously mentioned by the oil pressure on the upper surface of the piston 183 from the liquid-feed means 185.

According to the present invention, in the upper and lower mould fastening means in the tyre vulcanizer, the mould pressing means comprises a double-action cylinder whereby the up and down operation of the press may be carried out positively and the stop position when the moulds are closed off may be made constant.

Accordingly, a flat spring need not be used as in prior art, and not only is reliability enhanced but the operation can be carried out quickly as compared with the use of the flat spring since the lower mould cavity may be moved up by liquid pressure.

In the drawings, a base 201 is mounted on the horizontal surface through legs 202.

Reference numeral 203 designate a pair of left and right side guides, and a top slide 205 is mounted so as to be moved up and down through the expansion of left and right cylinders 204.

A lower dome 206 comprises a circular bottom plate 207 and a body 208 there around The dome is guided by connection shafts 209 radially erected on the base 201 and may be moved up and down and also moved up and down by a fastening cylinder mechanism 210.

The fastening cylinder mechanism 10 is radially arranged, and as will be apparent from Figure 13, the fastening cylinder mechanism 210 and the connection shafts 209 are arranged peripherally and alternately.

A support disc 211 is placed on a bottom plate 207 of the lower dome 206, and a cylindrical body 212 is mounted on the upper surface in the outer periphery of the support disc 211, the body 212 being inserted into a body 208 in the dome.

The support disc 211 and the body 212 substantially have the heat insulating function.

A lower platen support 213 is connected to the connection shafts 209 by bolts 214 on the support disc 211 and also connected to the piston 210A side of the fastening cylinder mechanism 210.

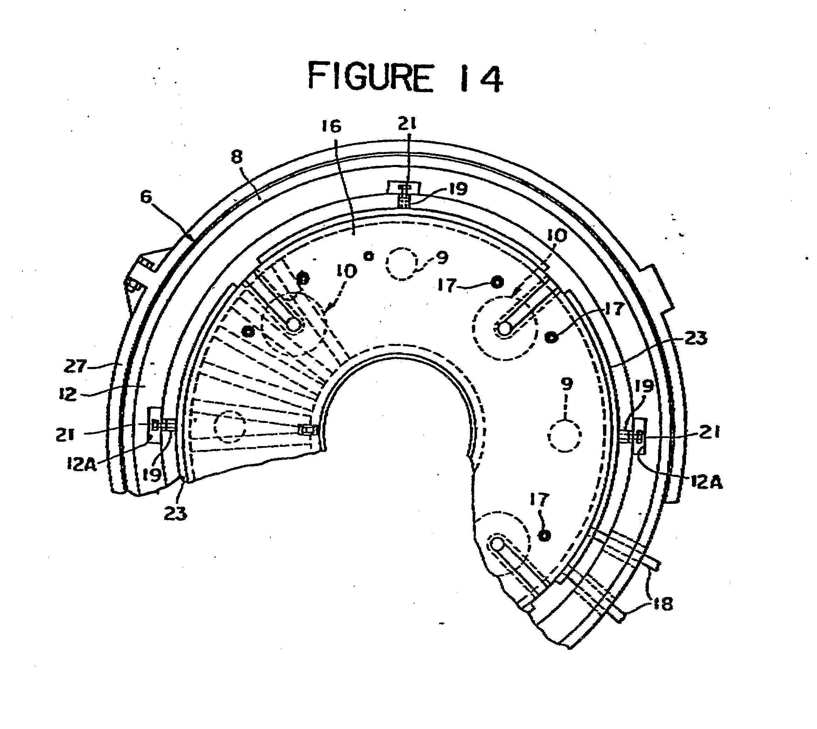

A lower platen 216 is placed on the lower platen support 213 and may be detachably secured by bolts 217 shown in Figures 12 and 14, and further a known lower mold though not shown is detachably fixed on the lower platen 216.

The interior of the lower platen 216 is formed into a cavity 216A capable of introducing the heating source such as steam therein, and steam or the like may be fed to or discharged from the cavity 216A through a pipe 218 from outward in a diametral direction.

As shown in Figures 12 and 14, four radially arranged arms 219 are mounted at intervals of 90° in the illustrated embodiment in the outer peripheral portion of the lower platen support 213, and these arms 219 extends upwardly and correspond to the outer periperal surface of the lower platen 216 in a diametral outer direction.

Further, radial tapped holes 220 extend through the corresponding portions of the arms 219, and a push bolt 221 is screwed into each of the tapped holes 220 through a lock nut 222 so that the push bolt may be moved forward and backward in a direction of a bolt axis.

The push bolt 221 has a head 21A which is operated by a tool or the like, and a vertical notch 212A is formed in the body 212 for interference of the head 212A and insertion of the tool.

An end of the push bolt 221 is brought into abutment with the outer circumferential surface of the lower platen and a bolt receiver 223 in the form of a circle as viewed in plan is secured to the outer circumferential surface of the lower platen 216.

An upper dome 224 comprises a cylindrical body 225 and a top 226,which is mounted on a top slide 205 as shown in Figure 14.

The upper dome 224 and the aforementioned lower dome 206 are on the concentric circle, and the registered surfaces of the bodies 208 ,225 may be fastened or released by the lock ring 227 shown in Figure 12.

An upper platen support 228 is mounted on the top 226 of the upper dome 224, an upper platen 229 having a heating source is detachably mounted on the upper platen support, and an upper mold though not shown is detachably mounted on the lower surface of the upper platen 229.

In this embodiment, the lower platen 216 and the upper platen 229 are arranged in a relation of above and below, and the upper and lower molds are opened and closed on the opposed surfaces thereof to constitute a mold device for molding an outer circumferential surface of a green tire. This mold device is encircled by the upper and lower domes 206 ,224 . When oil pressure is exerted on the cylinder mechanism 210 under the state where the lock ring 227 is fastened, the mold device may be applied with a closing force overcoming pressure during vulcanization.

A center mechanism 230 is positioned in a diametral direction by a guide tube 231 which moves up and down shown in Figure 12, and has a bladder detachably provided within the mold device.

The guide tube 231 is fixedly mounted on the inside diameter portion of the lower platen 216, and the center mechanism

- 40 -

230 having a bladder for molding the inner peripheral shape of a green tire is positioned to and mounted on the lower platen

As is known, the bladder may be expanded and contracted in the cavity of the mold device by supplying and discharging the heating medium such as steam.

According to the present invention, the lower platen 216 mounted on the lower platen support 213 may be moved forward and backward in a diametral inner and outer direction by the push bolt 221 to perform centering with respect to the upper platen 229, and thus, even if a deviation in centering between the upper platen 229 and the lower platen 216 due to the trial operation and change in passage of time, this can be adjusted and registered. Furthermore, it is possible to maintain the accuracy of the mold device to maintain the accuracy of vulcanization and molding of the tire.

In addition, since the outer peripheral surface of the lower platen 216 is pressed by the push bolt 221 from the diametral outer direction, it is to be always pressed with constant torque, thus reducing a possibility of giving rise to a deviation in centering despite the presence or absence of heating.

Moreover, a freedom in design of various guide portions in the vulcanizer may be considerably increased. That is, even if the guide portions are worn out, a clearance on one side is decreased and thereafter the lower platen 216 may be moved in a diametral direction by the push bolt 221 to adjust a concentricity.

Furthermore, since the adjustment of the lower platen may be done while adjusting to an adjusting allowance of the center mechanism 230, it is possible to easily effect centering and adjustment.

Finally, the embodiment of the fifth invention will be described.

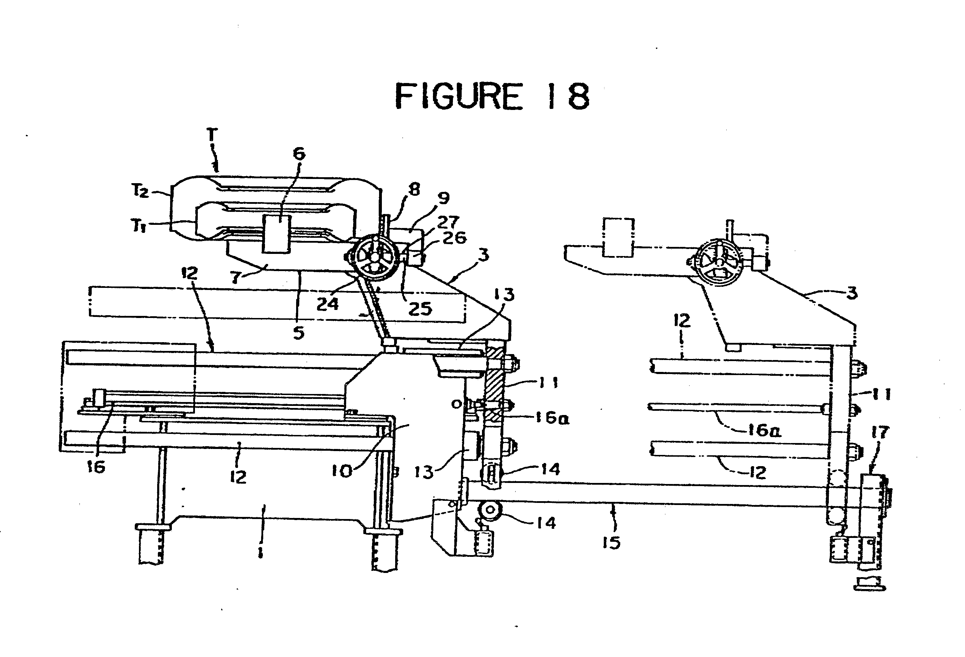

Reference is made to Figures 16 to 19 for the tyre carrying-out device, either conventional forward and backward moving in-and-out type or turning moving in-and-out type can be employed, and in this embodiment, the former type is shown. A tyre carrying-out device body 253 is slidably placed on a holder 260 installed by utilization of a base 251, slider is integrally provided on the lower end at the rear of the body 253 as shown in Figure 18, a guide bar 262 mounted on the slider 261 is slidably supported on a guide 263 provided on the holder 260, a guide roller 264 provided on the lower end of the slider 261 is brought into engagement with a guide bar 265 provided on the holder 260 in a rolling fashion, and a piston rod 266a of a driving cylinder 266 provided on the base 251 is connected to the slider 261 whereby the device body is reciprocated straight under the horizontal attitude, through the forward and backward movement of the piston rod 266a of the cylinder 266 and through the guide bar 265 of the slider 261, the guide 263 and guide roller 264 and the guide bar 262, for forward and backward movement from the outside of the vulcanizer toward the lower mould 252. Reference numeral 267 designates a bracket for supporting the other end of the guide bar 265. In the embodiment, there is shown, as one example, the twin type including two sets of vulcanizing and moulding moulds in which two lower moulds 252, 252 are juxaposed as shown in Figure 16 within the body of the vulcanizer comprising a frame of the base 251.

Therefore, the device body 253 is disposed there between but this can be also applied to the single type vulcanizer which merely includes one set of moulds.

The aforementioned support bodies 254, 254 are connected to left and right of a T-shaped beam 268 mounted on the front end of the device body 253, and a pair of support arms 255, 255 are provided in contact with and away from the support bodies 254, 254. Since both the arms 255, 255 have the same construction, the support arms 255, 255 in one support body 254 will be described. As shown in Figures 6 and 19, a rotatable shaft 270 parallel to the support body 254 is held on bearings 269 provided in the central portion of the support body 254 so that it may be rotated normally and reversely by a hand wheel 270, oppositely orientated screw portions 271, 271 are formed on opposite ends of the shaft 270, nuts 272, 272 provided at the rear end of the support arms 255, 255 are non-rotatably but slidably supported along the support body 254 through keys 273, 273. With this, the pair of support arms 255, 255 are moved toward and away from the centre of the tyre T through the normal and reverse rotation of the rotatable shaft 270 caused by the hand wheel 274 and through the engagement between the screw 271 and nut 272, whereby always positively and stably supporting the tyres $T_1$ and $T_2$ having different sizes. In the embodiment, the support arms 255, 255 are formed into plates in the form of L-shaped section, the upper surface supporting the tyre T is formed into a coarse surface or a rugged surface to prevent a skid of a tyre T, and guide stoppers 256 on both sides are uprightly secured externally of the support arms 255, 255 through brackets 257 projectingly provided on the side of the L-shaped plates. While in the embodiment, the stopper 256 is in the form of a straight wall, it is to be noted that it can be a suitably curved wall or a comb-tooth plate. The guide stopper 256 positioned between the guide stoppers 256, 256 and diametrally opposed to the peripheral side at the rear of the tyre T is designed so that as shown in Figures 18 and 19, the bearing 19 provided in the centre of the aforesaid support body 254 is utilized to project a guide shaft 275 at the rear of the bearing 269, a slide sleeve 276 provided on the lower end of the bracket 259 is held movably forward and backward on the shaft 275 through the engagement thereof with a key 277 and adjustably fixed by means of a stop bolt 278, and the guide stopper 258 in the form of a curved wall is mounted on the front end of the bracket 259, thereby capable of correspondingly adjusting the position relative to the guide stoppers 258, 258 on both sides which can be adjusted in position while moving together with the support arms 255, 255. This adjustment may be made manually but other mechanical means may be used to automatically adjust the slide.

The above-described construction is a mere example. The tyre carrying-out device 253 can be of the type in which the device is moved in and out of the upper portion in the centre of the mould by the turning motion, instead of the straight forward and backward type. Also, the straight forward and backward type may employ a forward and backward mechanism other than that shown. Also with respect to the motion mechanism for varying the spacing between the pair of support arms 255, 255 according to the size of the tyre diameter, a mechanism other than the type including the rotatable shaft 20 provided with the shown oppositely oriented screws and the nut 272 may be used while modifying the design. Moreover, in the embodiment, the guide stoppers 256, 256, 258 are a mere example. The number of such stoppers may be increased over the entire periphery of the tread portion t of the vulcanized tyre T, the length and width of the stopper may be freely selected except the height, and a material used therefore may also be freely selected. Since the restraint relative to the tyre T and other operations illustrated in the embodiment are similar to those as previously mentioned in the description of the operation, they will not be further described.

The present invention is excellent in overcoming the problems inherent in the conventional tyre carrying-out device, i.e., that the side wall surface of the vulcanized tyre is restrained to impede the free movement thereof, thus complicating the construction as required, that the side wall surface is liable to be deformed or scratched, and that when the tyre is moved by the carrying-out device outside the vulcanizer, at which point the tyre is gripped by a separate

- 46 -

0194855

gripping means, the gripping of the tyre is impaired by said means. The guide stoppers 256, 256, 258 which restrain the tread surface of the vulcanized tyre are arranged variably in position according to the tyre size to eliminate possible deformation of a tyre shape and surface damages thereof. Also as to the construction, stoppers lower in height than the tread surface are merely erected encircling the support members for the tyre bottom in the conventional carrying-out device, thus extremely simplifying the construction. Furthermore, since the stopper does not at all interfere with both upper and lower surfaces of the tyre placed horizontally, the gripping of the tyre by other tyre gripping means and the moving function are not at all impaired.

WHAT IS CLAIMED IS

1.    A tyre vulcanizer comprising a lower mould assembly secured to a press base, an upper mould assembly held movably up and down on a press side frame and provided to be opened and closed with respect to said lower mould assembly, a moulding bladder expansible with respect to a centre mechanism of the lower mould assembly and pressurized heating medium supplying means, characterized in that for maintaining a parallelism of the upper and lower mould assemblies, a torsion shaft for maintaining the parallelism which is movable up and down and rotatable about an axis in synchronism with the upper mould assembly is mounted at a position parallel to the press base, at a right angle to the side frame and not interfered with the upper and lower mould assemblies.

2.    A tyre vulcanizer in which a lower mould assembly is mounted on a press base, an upper mould assembly is held to be opened and closed with respect to said lower mould assembly on the side of a press frame, and screw shafts disposed on a mould supporting platen in a circumferentially equidistant fashion surrounding a centre mechanism of an assembly and nut gears provided adjustably in height through screw nuts threadedly engaged with said screw shafts at the top of an assembly done and mounted on said screw nuts are synchronously driven by a centre gear provided at the top of the dome concentric with said centre mechanism, characterized in that there is provided an idle gear meshed with the centre gear coaxial with a nut gear meshed with said centre gear, said idle gear being operatively connected to a driving gear on the side of a prime mover.

3. A tyre vulcanizer comprising a press base, a lower mould cavity and an upper mould cavity vertically movable toward said lower mould cavity, said both cavities being mounted opposedly on said press base, mechanical locking means for the upper and lower mould cavities, a centre mechanism arranged at each centre of the upper and lower mould cavities and mould pressing means directly acting on the lower portion of the lower mould, characterized in that the mould pressing means comprises a cylinder tube, a piston fitted therein and pressurized medium supplying means capable of supplying and discharging liquid pressure relative to both upper and lower surfaces of said piston, said cylinder tube is provided below the lower mould cavity through a mounting element, and said piston side is connected to the lower mould side.

4. A tyre vulcanizer in which platens each having a heating source are detachably mounted on opposite surfaces of vertically opposedly arranged platen supports, each platen being provided with an upper mould and a lower mould to form an openable and closeable mould device for moulding an outer peripheral surface of a green tyre, and a centre mechanism which is insertable and has a bladder for moulding an inner peripheral surface of a green tyre, characterized in that radially arranged arms are mounted on the outer peripheral portion of the lower platen support, said arms each being projected upwardly and corresponding to the outer peripheral surface of the lower platen in a diametral direction, tapped holes are radially extended through said corresponding portion, a push bolt is threadedly engaged with said tapped hole through alock nut so that the bolt may be fixed movably forward and backward in a direction of a bolt axis and the end of said bolt may be placed in contact with the outer peripheral surface of the lower platen, and the centre mechanism is mounted while being positoned to the lower platen.

5. A tyre vulcanizer comprising a carrying-out device for and vulcanized tyre provided movably into and out of a vulcanizing mould, characterized in that a plurality of and radially movable and securably guide stoppers are provided at a tyre support portion of said carrying-out device surrounding a tread portion of the tyre.

# FIGURE I

0194855

# FIGURE 2

# FIGURE 3

0194855

# FIGURE 4

0194855

# FIGURE 5

# FIGURE 6

FIGURE 7

0194855

FIGURE 9

FIGURE 8

7/15

0194855

FIGURE 10

0194855

# FIGURE 11

# FIGURE 12

# FIGURE 13

# FIGURE 14

0194855

# FIGURE 15

FIGURE 16                    FIGURE 19

FIGURE 17

FIGURE 18